# EUROPÄISCHE PATENTSCHRIFT

(11) **EP 3 000 307 B1**
(45) Veröffentlichungstag und Bekanntmachung des Hinweises auf die Patenterteilung: **18.12.2019**
(21) Anmeldenummer: 15182096.6
(22) Anmeldetag: 24.08.2015
(51) Int. Cl.: A01D 43/08, A01D 41/127, A01D 43/073

(54) **VERFAHREN ZUM ÜBERLADEN BEI ERNTEMASCHINEN**
METHOD FOR OVERLOADING IN CROP HARVESTING MACHINES
PROCEDE DE TRANSBORDEMENT POUR DES MOISSONNEUSES

(30) Priorität: 25.09.2014 DE 102014113874
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Middelberg, René, 49080 Osnabrück (DE); Kriebel, Bastian, 48155 Münster (DE); Krause, Thilo, 39249 Glinde (DE)
(74) Vertreter: CLAAS Gruppe

(56) Entgegenhaltungen:
- EP-A1- 1 219 158
- EP-A1- 2 020 174
- EP-A1- 2 526 752
- WO-A1-2012/110544
- US-A1- 2012 029 732

## Beschreibung

Die vorliegende Erfindung betrifft ein Verfahren und eine Vorrichtung zum Überladen von Erntegut für eine Erntemaschine.

Eine landwirtschaftliche Erntemaschine, insbesondere eine selbstfahrende Erntemaschine wie ein Mähdrescher, weist üblicherweise einen Speicher für das beim Ernten auf einem Feld aufgenommene Erntegut auf. Um diesen Speicher der Erntemaschine zu leeren kann das Erntegut aus dem Speicher der Erntemaschine auf ein Transportfahrzeug übergeladen werden. Je nach Organisation der Transportkette können ein oder mehrere Transportfahrzeuge die Erntemaschine jeweils bei Bedarf anfahren, wobei die Erntemaschine den Ernteprozess unterbrechungsfrei fortsetzen kann, während das Erntegut aus dem Speicher in das jeweilige Transportfahrzeug übergeladen werden kann. Ein landwirtschaftliche Erntemaschine ist aus EP 2 020 174 A1 bekannt.

Moderne Erntemaschinen werden üblicherweise an ihrer Leistungsgrenze betrieben, um einen möglichst effizienten Ernteprozess zu gewährleisten. Dabei kann die Geschwindigkeit der Erntemaschine, und damit auch der zu bearbeitende Massenstrom an Erntegut, variiert und beispielsweise einer Bestandsdichte des Erntegutes angepasst werden, so dass eine maximale Leistungsgrenze der Erntemaschine nicht überschritten wird. Für das Überladen des Erntegutes auf das Transportfahrzeug wird eine zusätzliche, bestimmte Leistung benötigt, so dass ein Bediener der Erntemaschine vor dem Starten des Überladeprozesses die benötigte Leistung verfügbar machen muss. Üblicherweise kann der Bediener der landwirtschaftlichen Erntemaschine die Geschwindigkeit und damit den zu bearbeitenden Massenstrom an Erntegut reduzieren, wodurch der Leistungsbedarf der Erntemaschine absinkt und das Überladen aktiviert werden kann, ohne dass die maximale Leistungsgrenze überschritten wird. Nachteilig ist jedoch, dass der Bediener die Reduzierung der Fahrgeschwindigkeit derart vornehmen muss, dass genügend Leistung für das Überladen zur Verfügung steht, Schwankungen im Erntegutbestand ausgeglichen werden können und der Ernteprozess nicht zu stark verlangsamt wird.

Es ist daher die Aufgabe der Erfindung, ein Verfahren zum Überladen von Erntegut für eine landwirtschaftliche Erntemaschine bereitzustellen, das eine vereinfachte Bedienung des Überladeprozesses und ein störungsfreies Überladen ermöglicht. Weiterhin ist es die Aufgabe der Erfindung eine Vorrichtung zum Überladen von Erntegut bereitzustellen, die eine vereinfachte Bedienung des Überladeprozesses und ein störungsfreies Überladen ermöglicht.

Die Aufgabe wird erfindungsgemäß durch die kennzeichnenden Merkmale der unabhängigen Patentansprüche 1 und 9 gelöst. Vorteilhafte Ausgestaltungen und Weiterbildungen der Erfindung ergeben sich aus den nachstehenden Unteransprüchen und den nachfolgenden Beschreibungen.

Ein Überladeverfahren für eine landwirtschaftliche Erntemaschine, wobei die landwirtschaftliche Erntemaschine eine von einer Transportposition in eine Betriebsposition verschwenkbaren Überladevorrichtung zum Überladen von Erntegut auf ein Transportfahrzeug und eine Steuerungs- und Regelvorrichtung zum Steuern des Überladens des Erntegutes aufweist, wobei erfindungsgemäß ein Zeitpunkt zum Aktivieren des Überladens von Erntegut identifiziert wird, und vor Aktivierung des Überladens eine Fahrgeschwindigkeit der landwirtschaftlichen Erntemaschine reduziert wird.

Der Überladezeitpunkt ist dabei der Zeitpunkt, zu dem das Überladen frühestens aktiviert werden kann, wobei unter Aktivierung des Überladens im Sinne der Erfindung der Zeitpunkt zu verstehen ist, an dem die Förderung des Erntegutes gestartet wird, beispielsweise mittels einer Förderschnecke, und die hierfür benötigte Leistung abgerufen wird. Die Identifizierung des Überladezeitpunktes berücksichtig dabei beispielsweise die Zeit, welche benötigt wird, um die Fahrzeuge relativ zueinander anzuordnen, einen bestimmten Auftreffpunkt anzufahren, oder wie lange eine spezifische Erntemaschine benötigt, um einen stabilen Betriebspunkt des Antriebsmotors einzuregeln.

Durch die Identifizierung des Überladezeitpunktes kann die Fahrgeschwindigkeit des Erntefahrzeuges so frühzeitig reduziert werden, dass die Antriebsmaschine, welche beim Ernten üblicherweise an seiner Leistungsgrenze betrieben wird, rechtzeitig vor Aktivierung des Überladens zum Überladezeitpunkt die benötigte Leistungsreserve bereitstellen kann. Die benötigte Leistungsreserve und damit die notwendige Reduktion der Fahrgeschwindigkeit kann erntemaschinenspezifisch berücksichtigt werden. Der Vorteil ist dabei, dass die Fahrgeschwindigkeit der Erntemaschine erst so spät wie nötig reduziert wird, um noch ein störungsfreies Aktivieren des Überladens zu ermöglichen, und dadurch der Ernteprozess nur so kurz wie nötig mit einer reduzierten Fahrgeschwindigkeit während des Überladens betrieben wird.

In einer bevorzugten Ausgestaltung der Erfindung umfasst das Identifizieren des Zeitpunktes zum Aktivieren des Überladens ein Erfassen und/oder Bewerten des Transportfahrzeuges durch ein Identifizierungsmittel. Durch das Identifizierungsmittel kann zunächst ein Transportfahrzeug erfasst werden, welches zum Aufnehmen des Erntegutes genutzt werden könnte. Durch eine Bewertung des Transportfahrzeuges kann eine Eignung des erfassten Transportfahrzeuges durchgeführt werden, wobei ermittelt werden kann, ob das erfasste Transportfahrzeug beispielsweise eine hinreichend große Kapazität zur Aufnahme des Erntegutes aufweist. Die Erfassung und/oder Bewertung des Transportfahrzeuges kann automatisch durchgeführt werden, wodurch der Bediener entlastet wird.

In einer besonders bevorzugten Ausgestaltung der Erfindung wird vor Aktivierung des Überladens ein Auftreffpunkt des Erntegutes auf dem Transportfahrzeug bestimmt und/oder angefahren. Die Bestimmung und/oder das Anfahren eines Auftreffpunktes des Erntegutes beeinflussen die Identifizierung des Überladezeitpunktes, da beispielsweise je nach Lage des Auftreffpunktes die relative Positionierung der Fahrzeuge zueinander zeitaufwändiger ist. Die Bestimmung und/oder das Anfahren des Auftreffpunktes vor Aktivierung des Überladens hat den Vorteil, dass das Transportfahrzeug nach einer vorgegebenen, beispielsweise transportfahrzeugabhängigen, Beladestrategie erfolgen kann, wodurch eine verbesserte Beladung des Transportfahrzeuges ermöglicht werden kann.

In einer besonders vorteilhaften Ausgestaltung der Erfindung wird vor Aktivierung des Überladens ein stabiler Betriebspunkt des Antriebsmotors eingeregelt. In einem stabilen Betriebspunkt des Antriebsmotors ist der Antriebsmotor derart eingeregelt, dass ein Abruf einer hohen Leistung im Wesentlichen störungsfrei und verzögerungsfrei erfolgen kann. Dies hat den Vorteil, dass die für das Überladen des Erntegutes benötigte Leistung, beispielsweise zum Antrieb einer Förderschnecke, unverzüglich bereitgestellt werden kann, ohne dass die Motorsteuerung noch mit der Regelung der Geschwindigkeitsreduzierung beschäftigt ist.

Vorteilhafter Weise umfasst das Identifizieren des Zeitpunktes zum Aktivieren des Überladens mindestens eine Interaktion mit einem Bediener der landwirtschaftlichen Erntemaschine. Eine Interaktion mit dem Bediener kann beispielsweise eine Zustimmung oder Ablehnung der Eignung eines bewerteten Transportfahrzeuges sein. Ebenso kann, beispielsweise aus Sicherheitsgründen, eine Freigabe zum Aktivieren des Überladevorganges erfolgen. Die hat den Vorteil, dass beispielsweise wesentliche Verfahrensschritte nur mit einer bewussten Zustimmung des Bedieners erfolgen können, wodurch Schäden durch ungewollt automatisch ablaufende Verfahrensschritte vermieden werden können.

In einer weiteren vorteilhaften Ausgestaltung der Erfindung erfolgt vor Reduzierung der Fahrgeschwindigkeit und/oder vor Aktivierung des Überladens eine grafische Anzeige für den Bediener. Dies hat den Vorteil, dass der Bediener ohne großen Aufwand erkennen kann, wann das Überladen aktiviert wird und/oder bereit zum aktivieren ist.

Vorteilhafterweise ist vor Reduzierung der Fahrgeschwindigkeit und/oder vor Aktivierung des Überladens eine Eingabe des Bedieners der landwirtschaftlichen Arbeitsmaschine erforderlich. Dies hat den Vorteil, dass dem Bediener die Möglichkeit gegeben wird den Überladevorgang abzubrechen oder, insbesondere zeitverzögert, zu Aktivieren, so dass für die Erntemaschine nicht erkennbare Umwelteinflüsse, beispielsweise ein Hindernis auf der während des Abtankens zu befahrenden Route, berücksichtigt werden können.

Vorteilhafterweise wird eine Fahrgeschwindigkeit des Transportfahrzeuges und/oder der Erntemaschine automatisch in Abhängigkeit einer Relativposition der landwirtschaftlichen Erntemaschine zu dem Transportfahrzeug geregelt. Dies bietet den Vorteil, dass, insbesondere während des Überladens, die Erntemaschine und das Transportfahrzeug in einer für das Überladen optimalen Relativposition zueinander angeordnet sind und während des Überladens auch bleiben. Hierbei kann besonders das Anfahren eines oder mehrerer Auftreffpunkte des Erntegutes auf dem Transportfahrzeug berücksichtigt werden. Die Fahrgeschwindigkeiten des Transportfahrzeuges und/oder der Erntemaschine können zunächst nach einer Reduzierung der Fahrgeschwindigkeit der Erntemaschine synchronisiert werden, und während des Überladens variiert werden, beispielsweise zum Anfahren eines Auftreffpunktes.

Weiterhin betrifft die Erfindung eine landwirtschaftliche Erntemaschine mit einer von einer Transportposition in eine Betriebsposition verschwenkbaren Überladevorrichtung zum Überladen von Erntegut auf ein Transportfahrzeug und einer Steuerungs- und Regelvorrichtung zum Steuern des Überladens des Erntegutes, wobei erfindungsgemäß die Steuerungs- und Regelvorrichtung derart ausgebildet und eingerichtet ist, dass ein Zeitpunkt zum Aktivieren des Überladens von Erntegut identifiziert wird, und dass vor Aktivierung des Überladens eine Fahrgeschwindigkeit der landwirtschaftlichen Erntemaschine reduziert wird.

Durch die Identifizierung des Überladezeitpunktes kann die Fahrgeschwindigkeit des Erntefahrzeuges so frühzeitig reduziert werden, dass die Antriebsmaschine, welche beim Ernten üblicherweise an seiner Leistungsgrenze betrieben wird, rechtzeitig vor Aktivierung des Überladens zum Überladezeitpunkt die benötigte Leistungsreserve bereitstellen kann. Die benötigte Leistungsreserve und damit die notwendige Reduktion der Fahrgeschwindigkeit kann erntemaschinenspezifisch berücksichtigt werden. Der Vorteil ist dabei, dass die Fahrgeschwindigkeit der Erntemaschine erst so spät wie nötig reduziert wird, um noch ein störungsfreies Aktivieren des Überladens zu ermöglichen, und dadurch der Ernteprozess nur so kurz wie nötig mit einer reduzierten Fahrgeschwindigkeit während des Überladens betrieben wird.

In einer weiteren Ausgestaltung der Erfindung ist zur Identifizierung des Zeitpunktes zum Aktivieren des Überladens das Transportfahrzeug mittels eines Identifizierungsmittels erfassbar und/oder bewertbar. Durch das Identifizierungsmittel kann zunächst ein Transportfahrzeug erfasst werden, welches zum Aufnehmen des Erntegutes genutzt werden könnte. Durch eine Bewertung des Transportfahrzeuges kann eine Eignung des erfassten Transportfahrzeuges durchgeführt werden, wobei ermittelt werden kann, ob das erfasste Transportfahrzeug beispielsweise eine hinreichend große Kapazität zur Aufnahme des Erntegutes aufweist. Die Erfassung und/oder Bewertung des Transportfahrzeuges kann automatisch durchgeführt werden, wodurch der Bediener entlastet wird.

Vorzugsweise ist das Identifizierungsmittel eine optische Sensoreinheit und/oder ein, insbesondere satellitengestütztes, Positionssystem ist. Die optische Sensoreinheit kann beispielsweise ein, insbesondere bildgebender, opto-elektronischer Sensor sein, beispielsweise eine Stereokamera oder eine sogenannte Time-of-flight Kamera. Eine optische Sensoreinheit bietet den Vorteil, mit einem Sensor eine Mehrzahl an Transportfahrzeugen identifizieren und bewerten zu können. Ein Positionssystem kann beispielsweise durch einen Austausch von Positionsdaten zwischen dem Transportfahrzeug und der Erntemaschine eine relative Position zwischen den Fahrzeugen ermitteln.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1:: eine schematische Darstellung einer landwirtschaftlichen Erntemaschine;
- Fig. 2:: eine schematische Draufsicht einer landwirtschaftlichen Erntemaschine und eines Transportfahrzeuges; und
- Fig. 3:: ein Ablaufdiagram mit einer schematischen Darstellung eines Überladevorganges.

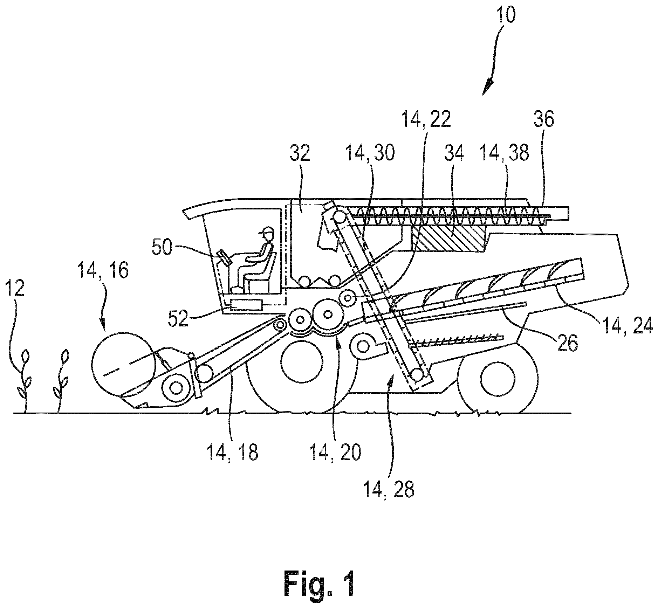

In Figur 1 ist eine landwirtschaftliche Erntemaschine 10 im Sinne der vorliegenden Erfindung dargestellt, bei der es sich beispielhaft um einen Mähdrescher handelt. Die Erntemaschine 10 weist zur Aufnahme und Bearbeitung von Erntegut 12 eine Vielzahl von Arbeitsaggregaten 14 auf. Zu den Arbeitsaggregaten 14 zählen bei dem hier dargestellten Mähdrescher ein Schneidwerk 16 zur Aufnahme des Erntegutes 12 und ein mit diesem verbundener Schrägförderer 18 zum Weitertransport des Erntegutes 12. Über den Schrägförderer 18 wird das Erntegut 12 als Erntegutstrom an eine Drescheinrichtung 18 der Erntemaschine 10 übergeben. Über eine Umlenktrommel 22 gelangt der Erntegutstrom in eine als Trennrotor ausgebildete Trenneinrichtung 24 zum Abscheiden von freibeweglichen Körnern des Erntegutstromes in einen unteren Bereich. Von hier aus gelangt der Erntegutstrom über einen Rücklaufboden 26 zu einer Reinigungsvorrichtung 28, welche Siebböden und ein Gebläse zur Reinigung des Erntegutes umfasst. Die freibeweglichen Körner aus dem Erntegutstrom werden über einen Kornelevator 30 zu einem Korntank 32 transportiert. Die Erntemaschine 10 weist zudem einen Antriebsmotor 34 auf, der die zum Betrieb der Arbeitsaggregate 14 und zur Fortbewegung der Erntemaschine 10, beispielsweise mittels eines Fahrantriebes (nicht dargestellt), benötigte Energie bereitstellt. Die Arbeitsaggregate 14 und der Fahrantrieb der Erntemaschine 10 sind hierfür, beispielsweise hydraulisch, zur Energieübertragung mit der Antriebsmaschine 34 verbunden.

Der Korntank 32 der landwirtschaftlichen Erntemaschine 10 weist nur eine begrenzte Kapazität zur Aufnahme von Erntegut 12 auf, so dass ein wiederholtes Entleeren des Erntegutes 12 aus dem Korntank 32 erforderlich ist. Das Entleeren des Korntanks 32 erfolgt dabei über eine Überladevorrichtung 36, welche beispielsweise bei einem Mähdrescher in Form eines Auslassrohres ausgebildet sein kann. Die Überladevorrichtung 36 ist üblicherweise von einer Transportposition in eine Betriebsposition verschwenkbar und/oder klappbar ausgebildet. Die in Figur 1 dargestellte Überladevorrichtung 36 ist in einer Transportposition, parallel zu einer Längsachse der Erntemaschine 10, dargestellt. Die Überladevorrichtung 36 kann während des normalen Erntebetriebes und während eines Transportes, beispielsweise einer Straßenfahrt der Erntemaschine 10, in der Transportposition angeordnet sein. Zum Überladen des Erntegutes 12 ist die Überladevorrichtung 36 aus der Transportposition in eine Betriebsposition verschwenkbar und/oder klappbar. Um das Erntegut 12 aus dem Korntank 32 der Erntemaschine 10 auf ein Transportfahrzeug überzuladen, weist die Überladenvorrichtung 36 mindestens eine Förderschnecke 38 zum Fördern des Erntegutes 12 auf.

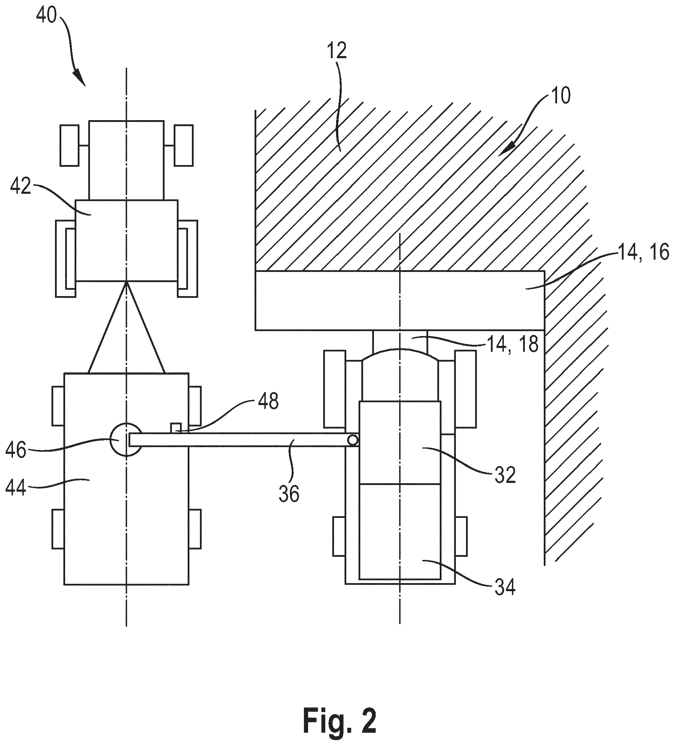

Die Überladevorrichtung 36 der in Figur 2 dargestellten Erntemaschine 10 ist aus der Transportposition in die Betriebsposition verschwenkt, wobei in der Betriebsposition die Überladevorrichtung 34 im Wesentlichen rechtwinkelig zur Erntemaschine 10 ausgerichtet ist. Neben der Erntemaschine 10 ist, insbesondere im Bereich der Überladevorrichtung 36, ein Transportfahrzeug 40 zum Aufnehmen des Erntegutes 12 angeordnet, welches mittels der Überladevorrichtung 36 von der Erntemaschine 10 auf das Transportfahrzeug 40 übergeladen werden kann. Ein Transportfahrzeug 40 kann beispielsweise, wie in Figur 2 dargestellt, ein Traktor 42 mit einem Anhänger 44 oder ein Lastkraftwagen sein.

Mit einem Aktivieren der Förderschnecke 38 der Überladevorrichtung 36 startet das tatsächliche Überladen des Erntegutes 12, das sogenannte Abtanken, von der Erntemaschine 10 auf das Transportfahrzeug 40, insbesondere auf den Anhänger 44 des Transportfahrzeuges 40. Beim Abtanken wird das Erntegut 12 aus dem Korntank 32 mittels mindestens der Förderschnecke 38 durch die Überladevorrichtung 36 transportiert. An einem freien Ende der Überladevorrichtung 36 verlässt das Erntegut 12 die Überladevorrichtung 36 und wird von dem Transportfahrzeug 40 an einem Auftreffpunkt 46 aufgenommen.

Die Überladevorrichtung 36 benötigt, ebenso wie die anderen Arbeitsaggregate 14 der Erntemaschine 10, eine bestimmte Leistung, um die Förderschnecke 38 in Rotation zu versetzten und um das Erntegut 12 zu fördern. Moderne Erntemaschinen 10 werden, insbesondere wenn sie eine automatische Steuerungs- und Regelvorrichtung 52 aufweisen, üblicherweise an ihrer oberen Leistungsgrenze betrieben, um einen möglichst effizienten Ernteprozess mit einem hohen Durchsatz an Erntegut 12 zu gewährleisten. Der Antriebsmotor 34 verfügt dabei nur über geringe Leistungsreserven. Ein Aktivieren der Überladevorrichtung 36, und insbesondere des Abtankvorganges, bei dem das Erntegut 12 gefördert wird, kann beispielsweise zu einem starken Einbruch der Drehzahl oder sogar zu einem Abwürgen des Antriebsmotors 34 führen, da der benötigte Leistungsbedarf der Überladevorrichtung 36, insbesondere beim Abtanken des Erntegutes 12, die verfügbare Leistung des Antriebsmotors 34 übersteigen kann.

In erfindungsgemäßer Weise kann ein Zeitpunkt t_{Ü} zum Aktivieren des Überladens von Erntegut 12, beispielsweise durch die Steuer- und Regelvorrichtung 52, identifiziert werden, wodurch vor einer Aktivierung des Überladens die Fahrgeschwindigkeit der landwirtschaftlichen Erntemaschine 10 reduziert werden kann, wodurch der Antriebsmotor 34 weniger Antriebsleistung zur Fortbewegung der Erntemaschine 10 bereitstellen muss und somit die verfügbare Leistungsreserve des Antriebsmotors 34, beispielsweise zum Abtanken des Erntegutes 12, vergrößert werden kann. Unter dem Aktivieren des Überladens zum Zeitpunkt t_{Ü} ist der Zeitpunkt zu verstehen, an dem die Förderung des Erntegutes 12, beispielsweise mittels der Förderschnecke 38 beginnt und eine erhöhte Leistung benötigt wird. Die Reduzierung der Fahrgeschwindigkeit kann dabei so rechtzeitig vor dem bestimmten Zeitpunkt t_{Ü} erfolgen, dass der Antriebsmotor 36 und/oder die Erntemaschine 10 in einen stabilen Betriebspunkt eingeregelt werden können. Durch die Reduzierung der Fahrgeschwindigkeit wird ebenfalls der Durchsatz an Erntegut 12 reduziert, wodurch die benötigte Leistung der Arbeitsaggregate 14 verringert werden kann. Die Fahrgeschwindigkeit der Erntemaschine 10 kann gezielt in Abhängigkeit der zum Überladen des Erntegutes benötigten Leistung reduziert werden, um vor dem Aktivieren des Überladens eine zum Überladen hinreichend große Leistungsreserve des Antriebsmotors 34 bereitzustellen. Der zum Überladen des Erntegutes 12 benötigte erntemaschinenspezifische Leistungsbedarf kann in der Steuer- und Regelvorrichtung 52 hinterlegt sein, insbesondere zum Identifizieren des Zeitpunktes t_{Ü} zum Aktivieren des Überladens. Durch die gezielte Reduzierung der Fahrgeschwindigkeit der Erntemaschine 10 kann die für das Abtanken des Erntegutes 12 benötigte Leistung rechtzeitig zur Verfügung gestellt werden, wodurch bei Aktivierung des Überladevorganges, also bei Aktivierung der Förderschnecke 38, ein Überschreiten der Leistungsgrenze des Antriebsmotors 34 vermieden werden kann. Die zum Überladen, insbesondere Abtanken, benötigte Leistung ist eine maschinen- und/oder erntegutspezifische Leistung, welche beispielsweise je nach Art der Erntemaschine 10 und/oder Art des Erntegutes, beispielsweise Getreide, Mais oder Raps, unterschiedlich groß sein kann.

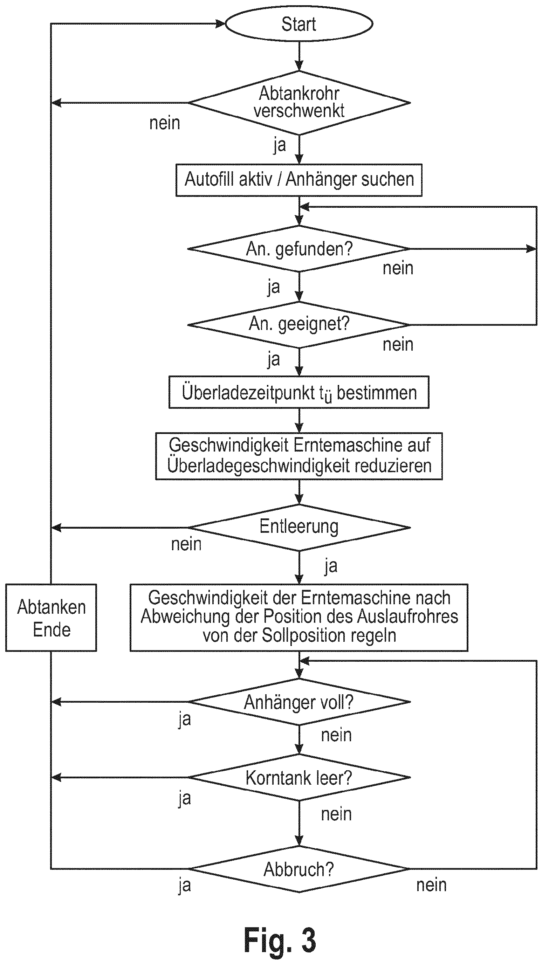

In Figur 3 ist der Ablauf eines erfindungsgemäßen Überladeverfahrens für die landwirtschaftliche Erntemaschine 10 dargestellt. Die Erntemaschine 10 kann dabei während des Ernteprozesses durch die Steuerungs- und Regelvorrichtung 52 automatisch effektiv an ihrer Leistungsgrenze betrieben werden, was zu einer Variation der Fahrgeschwindigkeit beim Ernten und einer damit verbundenen Variation des Erntegutstromes durch die Erntemaschine 10 führen kann. Zum Abtanken des Erntegutes 12 aus dem Korntank 32 der Erntemaschine 10, beispielsweise der in Figur 2 gezeigten Erntemaschine 10, kann zunächst zum Starten des Überladeverfahrens die Überladevorrichtung 36, beispielsweise in Form eines Abtankrohres mit einer Förderschnecke 38, aus der Transportposition in die Betriebsposition verschwenkt werden. Dies kann beispielsweise durch einen Bediener der Erntemaschine 10 erfolgen. Die Regelung der Fahrgeschwindigkeit und der Arbeitsaggregate 14 der Erntemaschine 10 erfolgt hierbei zunächst unverändert mit dem Ziel einen möglichst effizienten Ernteprozess zu erreichen.

Ist das Abtankrohr aus der Transportposition in die Betriebsposition verschwenkt, wird das automatische Überladen des Erntegutes 12 aktiviert und ein Transportfahrzeug 40, insbesondere ein Anhänger 44, zum Überladen des Erntegutes 12 gesucht. Zum auffinden eines Transportfahrzeuges 40, insbesondere eines Anhängers 44, weist die Erntemaschine 10 ein Identifizierungsmittel 48, welches insbesondere an der Überladevorrichtung 36, dem Abtankrohr, angeordnet sein kann, um ein Transportfahrzeug 40, insbesondere einen Anhänger 44, zu detektieren. Das Detektieren des Transportfahrzeuges 40 kann dabei zunächst ein reines Erfassen eines Fahrzeuges, insbesondere eines Transportfahrzeuges 40 sein, um zu prüfen, ob überhaupt ein Transportfahrzeug 40 zum Aufnehmen von Erntegut 12 vorhanden ist. Wird ein Transportfahrzeug 40 und/oder ein Anhänger 44 durch das Identifizierungsmittel 48 detektiert, ist in einem nächsten Schritt zu prüfen, ob das gefundene Transportfahrzeug 40 und/oder der Anhänger 44 auch zur Aufnahme des Erntegutes 12 geeignet ist. Solange kein Transportfahrzeug 40 und/oder Anhänger 44 gefunden wird, sucht das Identifizierungsmittel 48 weiter.

Ein von dem Identifizierungsmittel 48 detektiertes Transportfahrzeug 40 und/oder ein Anhänger 44 werden in einem weiteren Verfahrensschritt klassifiziert, wobei insbesondere von dem Identifizierungsmittel 48, geprüft wird, ob das erfasste Transportfahrzeug 40 und/oder der Anhänger 44 zum Aufnehmen des Erntegutes 12 geeignet sind. Das Klassifizieren eines Transportfahrzeuges 40, insbesondere des Anhängers 44, kann beispielsweise durch eine Bestimmung der Art des Transportfahrzeuges 40 und des verfügbaren Ladevolumens erfolgen, wobei dies durch einen Abgleich mit in einer Datenbank hinterlegten Daten zu verschiedenen Transportfahrzeugen 40 durchgeführt werden kann. Weiterhin kann das Klassifizieren des Transportfahrzeuges 40 und/oder des Anhängers 44 eine einmalige und/oder kontinuierliche Bestimmung des Füllstandes des erfassten Transportfahrzeuges 40 und/oder Anhängers 44 umfassen. Dadurch kann ermittelt werden, ob das detektierte und geeignete Transportfahrzeug 40 überhaupt noch genügend Kapazität zur Aufnahme des Erntegutes 12 aufweist. Eine Eignung des Transportfahrzeuges 40 und/oder Anhängers 44 zum Aufnehmen des Erntegutes 12 kann beispielsweise auch durch eine Eingabe des Bedieners positiv oder negativ beschieden werden, beispielsweise in Form einer Bestätigung/Ablehnung einer automatischen Klassifizierung oder als rein manuelle Eingabe.

Das Identifizierungsmittel 48 kann in Form einer optischen Sensoreinheit und/oder eines Ortungssystem ausgebildet sein, wobei durch das Ortungssystem eine relative Position der Erntemaschine 10 und des Transportfahrzeuges 40, insbesondere des Anhängers 44 des Transportfahrzeuges 40, ermittelbar und beispielsweise anzeigbar ist. Die optische Sensoreinheit kann eine oder mehrere Kameras, insbesondere Stereokameras, umfassen, wodurch eine unmittelbare optische Detektion eines Transportfahrzeuges 40 ermöglicht werden kann. Das Ortungssystem kann ein satellitenbasiertes, beispielsweise GPS-basiertes, Ortungssystem sein, welches eine Erfassung der absoluten Positionen und/oder der relativen Position des Transportfahrzeuges 40 und der Erntemaschine 10 ermöglicht, wodurch eine Detektion des Transportfahrzeuges 40 und eine Position relativ zur Erntemaschine 10, beispielsweise durch die Steuerungs- und Regelvorrichtung 52, bestimmbar ist. In Figur 2 weist die Erntemaschine 10 ein Identifizierungsmittel 48 in Form einer optischen Sensoreinheit auf, welche als Stereokamera ausgebildet ist und an der Überladevorrichtung 36 angeordnet ist. Das Klassifizieren und/oder Bestimmen des Füllstandes des Transportfahrzeuges 40 und/oder des Anhängers 44 kann, insbesondere bei einem Identifizierungsmittel 48 in Form eines Ortungssystems, beispielsweise durch den Bediener der Erntemaschine erfolgen.

Nach dem Detektieren eines geeigneten Transportfahrzeuges 40 und/oder Anhängers 44 durch das Identifizierungsmittel 48, wird in einem nächsten Verfahrensschritt ein Überladezeitpunkt t_{ü} bestimmt, an dem das Überladen, insbesondere frühestens, aktiviert werden kann. Dieser Zeitpunkt t_{ü} zum Überladen des Erntegutes 12 kann beispielsweise durch die automatische Steuerungs- und Regelvorrichtung 52 der Erntemaschine 12 ermittelt werden. Unter dem Zeitpunkt t_{ü} zum Überladen des Erntegutes 12 ist im Sinne der Erfindung der Zeitpunkt zu verstehen, an dem frühestens das Abtanken des Erntegutes 12 erfolgen kann und die zur Förderung des Erntegutes 12 benötigte Leistung, beispielsweise durch Aktvieren der Förderschnecke 38, benötigt wird. Eine Bestimmung des Überladezeitpunkts t_{ü} kann in Abhängigkeit von maschinen- und/oder erntegutspezifischen Daten erfolgen. Maschinenspezifische Daten können dabei beispielsweise die zum Abtanken benötigte Leistung einer spezifischen Erntemaschine 10, die beim Überladen zu fahrende Geschwindigkeit der Erntemaschine 10, eine Dauer des Abtankvorgangs bei einem bestimmten Füllstand des Korntank 32, oder ein gewünschter Massen- oder Volumenstrom des überzuladenden Erntegutes sein. Erntegutspezifische Parameter können beispielsweise das überzuladende Erntegut 12 und/oder die für dieses Erntegut 12 zum Überladen benötigte Leistung sein.

Aufgrund der maschinenspezifischen und/oder erntegutspezifischen Daten kann die zum Überladen des Erntegutes 12 benötigte Leistung für die jeweilige Erntemaschine 10 und/oder das jeweilige Erntegut 12 vorher bestimmt werden. Auf Grund dieser zum Überladen benötigten Leistung kann dann, beispielsweise durch die automatische Regeleinrichtung oder eine Steuereinheit der Erntemaschine 10, ermittelt werden, auf welche Geschwindigkeit, nämlich die Überladegeschwindigkeit, die Erntemaschine 10 zum Überladen des Erntegutes 12 gedrosselt werden muss, damit bei Aktivieren des Überladens oder Abtankens die Leistungsgrenze des Antriebsmotors 34 nicht überschritten wird. Die vorher bestimmte Leistung zum Abtanken einer Erntemaschine 10 kann vor der Ermittlung der erntemaschinen- und/oder erntegutspezifischen Überladegeschwindigkeit mittels mindestens eines Faktors erhöht werden, der einen zusätzlichen Leistungsbedarf, beispielsweise zum Überwinden eines Anfahrwiderstandes, erfasst. Dadurch kann vor einer Aktivierung des Überladens die Fahrgeschwindigkeit der Erntemaschine 10 auf eine im Wesentlichen konstante Überladegeschwindigkeit reduziert werden. Durch das Absenken der Geschwindigkeit kann die zum Überladen zusätzlich zu der Ernte benötigte Leistung zur Verfügung gestellt werden. Weiterhin kann bei der Bestimmung des Überladezeitpunktes t_{ü} eine zum Ausrichten der Erntemaschine 10 und des Transportfahrzeuges 40 zueinander benötigte Zeit berücksichtigt werden, um die Überladeposition zu erreichen. Zudem kann die Zeit zum Anfahren eines beispielsweise durch eine Beladestrategie vorgegebenen Auftreffpunktes 46 berücksichtigt werden.

Nach dem Bestimmen des Überladezeitpunktes t_{ü} erfolgt ein Absenken der Fahrgeschwindigkeit der Erntemaschine 10, insbesondere durch die Steuerungs- und Regelvorrichtung 52, so rechtzeitig vor dem bestimmten Überladezeitpunkt t_{ü}, dass der Antriebsmotor 36 und/oder die Erntemaschine 10, insbesondere die Arbeitsaggregate 14, in stabile Betriebspunkte eingeregelt werden können, bevor die mit der Aktivierung des Überladevorganges benötigte Leistung abgerufen wird. Das Absenken der Fahrgeschwindigkeit der Erntemaschine 10 kann dabei automatisch erfolgen und/oder dem Bediener der Erntemaschine 10 kann ein beabsichtigtes Absenken der Fahrgeschwindigkeit angezeigt werden. Ein Anzeigen eines beabsichtigten Absenkens der Fahrgeschwindigkeit kann eine Eingabe des Bedieners erfordern, beispielsweise eine Bestätigung oder eine Ablehnung, wobei eine Reduzierung der Geschwindigkeit erst nach einer Bestätigung durch den Bediener erfolgen kann. Bei einer Ablehnung der beabsichtigten Absenkung der Fahrgeschwindigkeit, oder bei einer ausbleibenden Bestätigung oder Ablehnung durch den Bediener kann die Fahrgeschwindigkeit unverändert bleiben, beispielsweise wenn der Bediener zu dem Zeitpunkt keinen Überladevorgang initiieren möchte. Das Verfahren würde hierbei wieder von vorne mit der Überprüfung des verschwenkten Abtankrohres starten.

Nach dem Absenken der Fahrgeschwindigkeit der Erntemaschine 10 kann ein, insbesondere automatisches, Synchronisieren der Geschwindigkeit der Erntemaschine 10 und des Transportfahrzeuges 40 erfolgen. Dabei kann die Fahrgeschwindigkeit des Transportfahrzeuges 40 an die abgesenkte Fahrgeschwindigkeit der Erntemaschine angepasst werden und beispielsweise mit dieser synchron gehalten werden. Die Fahrgeschwindigkeit der Erntemaschine 10 kann, beispielsweise mittels drahtloser Kommunikationsmittel der Erntemaschine 10 und des Transportfahrzeuges 40, an das Transportfahrzeug 40 übermittelt werden. Das Synchronisieren der Geschwindigkeiten zwischen der Erntemaschine 10 und dem Transportfahrzeug 40 kann das Ermitteln und Anfahren einer bestimmten Überladeposition mit einem ermittelten Auftreffpunkt 46 des Erntegutes 12 auf dem Transportfahrzeug 40 umfassen. Der Auftreffpunkt 46 des Erntegutes 12 auf dem Transportfahrzeug 40 kann dabei durch eine Überladestrategie vorgegeben sein. Die Überladeposition und/oder der Auftreffpunkt 46 können beispielsweise durch das Identifizierungsmittel 48, die automatische Regeleinrichtung oder eine Steuereinheit der Erntemaschine 12 ermittelt werden.

Nach dem Synchronisieren der Geschwindigkeiten der Erntemaschine 10 und des Transportfahrzeugs 40, und insbesondere nach dem Anfahren des Auftreffpunktes 46, kann das Abtanken des Erntegutes 12, das Entleeren des Korntanks 32, auf das Transportfahrzeug 40 aktiviert werden. Dieser Überladezeitpunkt t_{ü} ist dabei der früheste Zeitpunkt zu dem alle Voraussetzungen für das Aktivieren des Überladens gegeben sind, insbesondere die zuverlässige Bereitstellung der benötigten Leistung durch den Antriebsmotor 34, welcher nach der Absenkung der Fahrgeschwindigkeit und dem Synchronisieren in einen stabilen Betriebspunkt eingeregelt ist, und der die für das Überladen benötigte zusätzliche Leistung ohne ein übermäßiges Einbrechen der Drehzahl oder ein Überschreiten der Leistungsgrenze des Antriebsmotors 34 bereitstellen kann.

Die Entleerung des Korntankes 32, das sogenannte Abtanken, kann automatisch durch die Steuerungs- und Regelvorrichtung 52 oder manuell durch den Bediener zum oder nach dem Überladezeitpunkt t_{ü} gestartet werden. Vor einer automatischen Aktivierung des Abtankens, insbesondere vor der Aktivierung der Förderschnecke 18, kann die beabsichtigte Aktivierung dem Bediener angezeigt werden, beispielsweise auf einer Anzeigeeinheit 50. Zudem kann zur Aktivierung des Abtankens eine Eingabe des Bedieners erforderlich sein, beispielsweise eine Eingabe, die der Aktivierung zustimmt oder diese abbricht. Eine Aktivierung des Überladens kann aber auch nach einer voreingestellten Zeit, beispielsweise mit Beginn des Anzeigens der Aktivierung, automatisch gestartet werden, wobei der Bediener lediglich die Aktivierung abbrechen kann. Wird die Entleerung bzw. das Abtanken zu diesem Zeitpunkt nicht gestartet, bleibt die Überladevorrichtung 36 inaktiv und das Verfahren läuft erneut durch, bis beispielsweise durch das Identifizierungsmittel 48 ein neues Transportfahrzeug 40 gefunden und als geeignet eingeschätzt wird. Die Fahrgeschwindigkeit der Erntemaschine 10 wird dabei wieder in Abhängigkeit der Erntebedingungen und der Maschinenparameter geregelt, wodurch die Fahrgeschwindigkeit im Wesentlichen wieder auf die Fahrgeschwindigkeit vor der Reduzierung angehoben wird. Wird kein neues Transportfahrzeug 40 gefunden oder als nicht geeignet eingeschätzt, bleibt die Überladevorrichtung 36 weiterhin inaktiv.

Nach gestarteter Entleerung bzw. Abtanken kann die Geschwindigkeit der Erntemaschine 10 nach der Abweichung der Überladevorrichtung 36 bzw. des Auslaufrohres von einer Sollposition geregelt und/oder synchronisiert werden. Zu einer Abweichung der Überladevorrichtung 36 aus der Sollposition kann es durch das Befüllen des Transportfahrzeuges 40 kommen, wobei beispielsweise nach einer bestimmten Beladestrategie unterschiedliche Bereiche des Transportfahrzeuges 40 nacheinander befüllt werden, wobei der Auftreffpunkt 46 des Erntegutes 12 relativ zu dem Transportfahrzeug 40 verändert werden muss. Dies kann zunächst durch ein Verschwenken der Überladevorrichtung 36 erfolgen, welche dabei aus der bevorzugten Sollposition herausschwenkt um den gewünschten Auftreffpunkt 46 anzufahren. Durch das entsprechende Regeln der Fahrgeschwindigkeit der Erntemaschine 10 und die damit verbundene Änderung der Relativposition zwischen den Fahrzeugen kann, insbesondere bei im Wesentlichen konstanter Fahrgeschwindigkeit des Transportfahrzeuges 40, die Überladevorrichtung 36 wieder in die Sollposition zurückgeschwenkt werden.

Nach der Aktivierung der Entleerung bzw. des Abtankens kann das Überladen so lange aktiviert bleiben, bis der Anhänger gefüllt ist und kein weiteres Erntegut 12 mehr aufnehmen kann, was beispielsweise durch das Identifizierungsmittel 48 ermittelt werden kann. Dies führt zu einem Beenden des Abtankens, d.h. ein Stoppen des Fördervorganges und damit der Förderschnecke 38, und das Identifizierungsmittel 48 sucht nach einem neuen Transportfahrzeug 40 solange die Überladevorrichtung 36 bzw. das Abtankrohr ausgeschwenkt ist. Hierbei kann durch das Identifizierungsmittel 48 bereits während des Abtankens ein benachbart zu dem vollen Transportfahrzeug 40 angeordnetes zweites Transportfahrzeug 40 detektieren und klassifizieren, so dass nach Befüllen des ersten Transportfahrzeuges 40 unmittelbar das benachbarte und als geeignet klassifizierte Transportfahrzeug 40 zum Abtanken genutzt werden kann. Dies hat den Vorteil, dass die Unterbrechung beim Abtanken nur sehr kurz sind und die Fahrgeschwindigkeit der Erntemaschine 10 nicht angehoben wird, da bereits der Überladezeitpunkt t_{ü} für das nächste Transportfahrzeug 40 bestimmt werden kann. Solange das Transportfahrzeug 40 und/oder der Anhänger 44 noch nicht vollständig gefüllt sind, läuft das Abtanken weiter.

Der Abtankvorgang kann auch beendet werden, wenn der Korntank 32 im Wesentlichen leer ist und kein weiteres Erntegut 12 zum Abtanken vorhanden ist. Dies führt zu einem Beenden des Abtankens, d.h. ein Stoppen des Fördervorganges und damit der Förderschnecke 38, und das Identifizierungsmittel 48 sucht nach einem neuen Transportfahrzeug 40 solange die Überladevorrichtung 36 bzw. das Abtankrohr ausgeschwenkt ist. Da kein weiteres Erntegut 12 übergeladen werden kann, wird jedoch der Bediener die Überladevorrichtung 36 einschwenken, so dass das Überladeverfahren bis zum nächsten Ausschwenken der Überladevorrichtung 36 unterbrochen wird. Solange der Korntank 32 noch genügend Erntegut 12 zum Überladen enthält, läuft das Abtanken weiter.

Zu einem Ende des Abtankens kann es auch durch einen automatischen und/oder manuellen Abbruch kommen. So kann der Bediener den Überladevorgang jederzeit durch eine entsprechende Eingabe abbrechen, beispielsweise um eine technische Störung oder einen Unfall zu vermeiden. Das Überladen kann auch automatisch durch die Steuerungs- und Regelvorrichtung 52 abgebrochen werden, wenn das Identifizierungsmittel 48 ein bereits erkanntes und geeignetes Transportfahrzeug 40 nicht mehr erfasst, d.h. verliert. Dies kann beispielsweise geschehen, wenn das Transportfahrzeug 40 ein unerwartetes Fahrmanöver durchführt und aus dem Erfassungsbereich des Identifizierungsmittels 48 herausfährt. Ein Abbruch des Überladeverfahrens führt dabei zu einer Beendigung des Abtankvorganges, also einem Stoppen der Förderschnecke 38 und damit der Förderung des Erntegutes 12. Die Erntemaschine 10 wird dann zunächst wieder auf die Fahrgeschwindigkeit vor der Reduzierung eingeregelt.

### Bezugszeichenliste

- 10: landwirtschaftliche Erntemaschine
- 12: Erntegut
- 14: Arbeitsaggregat
- 16: Schneidwerk
- 18: Schrägförderer
- 20: Drescheinrichtung
- 22: Umlenktrommel
- 24: Trenneinrichtung
- 26: Rücklaufboden
- 28: Reinigungsvorrichtung
- 30: Kornelevator
- 32: Korntank
- 34: Antriebsmotor
- 36: Überladevorrichtung
- 38: Förderschnecke
- 40: Transportfahrzeug
- 42: Traktor
- 44: Anhänger
- 46: Auftreffpunkt
- 48: Identifizierungsmittel
- 50: Anzeigeeinheit
- 52: Steuerungs- und Regelvorrichtung

- t_{ü}: Überladezeitpunkt

## Patentansprüche

1. Überladeverfahren für eine landwirtschaftliche Erntemaschine, wobei die landwirtschaftliche Erntemaschine (10) eine von einer Transportposition in eine Betriebsposition verschwenkbare Überladevorrichtung (36) zum Überladen von Erntegut (12) auf ein Transportfahrzeug (40) und eine Steuerungs- und Regelvorrichtung (52) zum Steuern des Überladens des Erntegutes (12) aufweist, **dadurch gekennzeichnet, dass**
ein Überladezeitpunkt (t_{ü}) zum Aktivieren des Überladens von Erntegut (12) identifiziert wird, und dass vor Aktivierung des Überladens die Fahrgeschwindigkeit der landwirtschaftlichen Erntemaschine (10) reduziert wird.

2. Verfahren nach Anspruch 1, **dadurch gekennzeichnet, dass** ein Identifizieren des Zeitpunktes (t_{ü}) zum Aktivieren des Überladens ein Erfassen und/oder Bewerten des Transportfahrzeuges (40) durch ein Identifizierungsmittel (48) umfasst.

3. Verfahren nach Anspruch 1 oder 2, **dadurch gekennzeichnet, dass** vor Aktivierung des Überladens ein Auftreffpunkt (46) des Erntegutes (12) auf dem Transportfahrzeug (40) bestimmt und/oder angefahren wird.

4. Verfahren nach einem der Ansprüche 1 bis 3, **dadurch gekennzeichnet, dass** vor Aktivierung des Überladens ein stabiler Betriebspunkt des Antriebsmotors (34) eingeregelt wird.

5. Verfahren nach einem der Ansprüche 1 bis 4, **dadurch gekennzeichnet, dass** das Identifizieren des Zeitpunktes (t_{ü}) zum Aktivieren des Überladens mindestens eine Interaktion mit einem Bediener der landwirtschaftlichen Erntemaschine (10) umfasst.

6. Verfahren nach einem der Ansprüche 1 bis 5, **dadurch gekennzeichnet, dass** vor Reduzierung der Fahrgeschwindigkeit und/oder vor Aktivierung des Überladens eine grafische Anzeige für den Bediener erfolgt.

7. Verfahren nach einem der Ansprüche 1 bis 6, **dadurch gekennzeichnet, dass** vor Reduzierung der Fahrgeschwindigkeit und/oder vor Aktivierung des Überladens eine Eingabe des Bedieners der landwirtschaftlichen Arbeitsmaschine (10) erforderlich ist.

8. Verfahren nach einem der Ansprüche 1 bis 7, **dadurch gekennzeichnet, dass** eine Fahrgeschwindigkeit des Transportfahrzeuges (40) und/oder der Erntemaschine (10) automatisch in Abhängigkeit einer Relativposition der landwirtschaftlichen Erntemaschine (10) zu dem Transportfahrzeug (40) geregelt wird.

9. Landwirtschaftliche Erntemaschine mit einer von einer Transportposition in eine Betriebsposition verschwenkbaren Überladevorrichtung (36) zum Überladen von Erntegut (12) auf ein Transportfahrzeug (40) und einer Steuerungs- und Regelvorrichtung (52) zum Steuern des Überladens des Erntegutes (12),
**dadurch gekennzeichnet, dass**
die Steuerungs- und Regelvorrichtung (52) derart ausgebildet und eingerichtet ist, dass ein Zeitpunkt (t_{ü}) zum Aktivieren des Überladens von Erntegut (12) identifiziert wird, und dass vor Aktivierung des Überladens die Fahrgeschwindigkeit der landwirtschaftlichen Erntemaschine (10) reduziert wird.

10. Landwirtschaftliche Erntemaschine nach Anspruch 9, **dadurch gekennzeichnet, dass** zur Identifizierung des Zeitpunktes (t_{ü}) zum Aktivieren des Überladens das Transportfahrzeug (40) mittels eines Identifizierungsmittels (48) erfassbar und/oder bewertbar ist.

11. Landwirtschaftliche Erntemaschine nach Anspruch 9 oder 10, **dadurch gekennzeichnet, dass** das Identifizierungsmittel (48) eine optische Sensoreinheit und/oder ein, insbesondere satellitengestütztes, Positionssystem ist.

## Claims

1. A transfer method for an agricultural harvesting machine, wherein the agricultural harvesting machine (10) has a transfer device (36) which can be pivoted from a transport position into an operating position in order to transfer crop (12) onto a transport vehicle (40), and a controlling and regulating device (52) for controlling the transfer of the crop (12), **characterized in that**
a transfer timepoint (tt) for activation of the transfer of crop (12) is identified, and **in that** prior to activation of the transfer, the drive speed of the agricultural harvesting machine (10) is reduced.

2. The method according to claim 1, **characterized in that** an identification of the timepoint (tt) for activation of the transfer comprises a detection and/or evaluation of the transport vehicle (40) by means of an identification means (48).

3. The method according to claim 1 or claim 2, **characterized in that** prior to activation of the transfer, a point of incidence (46) for the crop (12) on the transport vehicle (40) is determined and/or approached.

4. The method according to one of claims 1 to 3, **characterized in that** prior to activation of the transfer, a stable operating point for the drive motor (34) is set.

5. The method according to one of claims 1 to 4, **characterized in that** the identification of the timepoint (tt) for activation of the transfer comprises at least one interaction with an operator of the agricultural harvesting machine (10).

6. The method according to one of claims 1 to 5, **characterized in that** prior to reduction of the drive speed and/or prior to activation of the transfer, a graphical display is produced for the operator.

7. The method according to one of claims 1 to 6, **characterized in that** prior to reduction of the drive speed and/or prior to activation of the transfer, an input by the operator of the agricultural working machine (10) is required.

8. The method according to one of claims 1 to 7, **characterized in that** a drive speed of the transport vehicle (40) and/or of the harvesting machine (10) is adjusted automatically as a function of a position of the agricultural harvesting machine (10) relative to the transport vehicle (40).

9. An agricultural harvesting machine with a transfer device (36) which can be pivoted from a transport position into an operating position in order to transfer crop (12) onto a transport vehicle (40) and a controlling and regulating device (52) for controlling the transfer of the crop (12), **characterized in that**
the controlling and regulating device (52) is constructed and configured such that a timepoint (tt) for activation of the transfer of crop (12) is identified, and **in that** prior to activation of the transfer, the drive speed of the agricultural harvesting machine (10) is reduced.

10. The agricultural harvesting machine as claimed in claim 9, **characterized in that** in order to identify the timepoint (tt) for the activation of the transfer, the transport vehicle (40) can be detected and/or evaluated by means of an identification means (48).

11. The agricultural harvesting machine as claimed in claim 9 or claim 10, **characterized in that** the identification means (48) is an optical sensor unit and/or a positioning system, in particular a satellite-supported positioning system.

## Revendications

1. Procédé de transfert pour une machine agricole de récolte, la machine agricole de récolte (10) comportant un dispositif de transfert (36) pivotable d'une position de transport vers une position de fonctionnement pour transférer du produit récolté (12) à un véhicule de transport (40), et un dispositif de commande et de régulation (52) pour commander le transfert du produit récolté (12), **caractérisé en ce qu'**un moment de transfert (t_{ü}) est identifié pour activer le transfert de produit récolté (12), et **en ce qu'**avant l'activation du transfert, la vitesse de marche de la machine agricole de récolte (10) est réduite.

2. Procédé selon la revendication 1, **caractérisé en ce qu'**une identification du moment (t_{ü}) pour activer le transfert inclut une détection et/ou une évaluation du véhicule de transport (40) par un moyen d'identification (48).

3. Procédé selon la revendication 1 ou 2, **caractérisé en ce qu'**avant l'activation du transfert, un point d'impact (46) du produit récolté (12) sur le véhicule de transport (40) est déterminé et/ou atteint.

4. Procédé selon une des revendications 1 à 3, **caractérisé en ce qu'**avant l'activation du transfert, un point de fonctionnement stable du moteur d'entraînement (34) est adopté.

5. Procédé selon une des revendications 1 à 4, **caractérisé en ce que** l'identification du moment (t_{ü}) pour activer le transfert inclut au moins une interaction avec un utilisateur de la machine agricole de récolte (10).

6. Procédé selon une des revendications 1 à 5, **caractérisé en ce qu'**avant la réduction de la vitesse de marche et/ou avant l'activation du transfert, un affichage graphique est effectué pour l'utilisateur.

7. Procédé selon une des revendications 1 à 6, **caractérisé en ce qu'**avant la réduction de la vitesse de marche et/ou avant l'activation du transfert, une entrée de l'utilisateur de la machine de travail agricole (10) est nécessaire.

8. Procédé selon une des revendications 1 à 7, **caractérisé en ce qu'**une vitesse de marche du véhicule de transport (40) et/ou de la machine de récolte (10) est régulée automatiquement en fonction d'une position relative de la machine agricole de récolte (10) par rapport au véhicule de transport (40).

9. Machine agricole de récolte comprenant un dispositif de transfert (36) pivotable d'une position de transport vers une position de fonctionnement pour transférer du produit récolté (12) à un véhicule de transport (40), et un dispositif de commande et de régulation (52) pour commander le transfert du produit récolté (12), **caractérisée en ce que** le dispositif de commande et de régulation (52) est conçu et agencé de façon qu'un moment (t_{ü}) soit identifié pour activer le transfert de produit récolté (12), et **en ce qu'**avant l'activation du transfert, la vitesse de marche de la machine agricole de récolte (10) est réduite.

10. Machine agricole de récolte selon la revendication 9, **caractérisée en ce que**, pour identifier le moment (t_{ü}) pour activer le transfert, le véhicule de transport (40) peut être détecté et/ou évalué au moyen d'un moyen d'identification (48).

11. Machine agricole de récolte selon la revendication 9 ou 10, **caractérisée en ce que** le moyen d'identification (48) est une unité de capteur optique et/ou un système positionnel, en particulier à assistance satellitaire.
